# EUROPEAN PATENT APPLICATION

(11) **EP 4 275 863 A1**
(43) Date of publication of application: **15.11.2023**
(21) Application number: 22172634.2
(22) Date of filing: 10.05.2022
(51) Int. Cl.: B29C 48/00, B29C 48/08, B29C 48/154, B29C 48/21, B65D 35/00, B32B 27/08, B32B 27/30, B32B 27/32

(54) **METHOD FOR MANUFACTURING A TUBE LAMINATE, TUBE LAMINATE AND TUBE PACKAGING**

(71) Applicant: Huhtamaki Flexible Packaging Germany GmbH & Co. KG, 87671 Ronsberg (DE)
(72) Inventor: Souza, Mayara, 59151250 Parnamirim, RN (BR); Losert, Wolfgang, 87634 Obergünzburg (DE); Patil, Vishwanath, 410210 Navi Mumbai (IN)
(74) Representative: Ruttensperger Lachnit Trossin Gomoll

(57) **Abstract**

The present invention relates to a method for forming a multi-layer packaging laminate (66), the method comprising the following steps in the mentioned order:
i) providing a polyolefin film (14) as a base layer (16) of the laminate (66), wherein the base layer (16) forms a first outermost polymer surface (14b) of the laminate (66),
ii) applying a first polymer layer arrangement (26) in a flowable state onto the base layer (16) at a first application station (18), the first polymer layer arrangement (26) having at least one polymer layer,
iii) transporting the base layer (16) with the applied first polymer layer arrangement (26) to a further application station (56),
iv) applying a second polymer layer arrangement (64) onto the first polymer layer arrangement (26) at the further application station (56), the second polymer layer arrangement (64) having at least one polymer layer, wherein the second polymer layer arrangement (64) forms a second outermost polymer surface of the laminate (66),
wherein at least one of the first (26) and the second polymer layer arrangement (64) contains a water vapor and/or oxygen transmission polymer barrier layer (76).

According to the invention the second polymer layer arrangement (64) is applied to the first polymer layer arrangement (26) in a flowable state.

## Description

### Specification

The present invention refers to a method for manufacturing a multi-layer packaging laminate, in particular a multi-layer tube laminate, wherein the method comprises the following steps in the mentioned order:
i) providing a polyolefin film as a base layer of the laminate, wherein the base layer forms a first outermost polymer surface of the laminate,
ii) applying a first polymer layer arrangement in a flowable state onto the base layer at a first application station, the first polymer layer arrangement having at least one polymer layer,
iii) transporting the base layer with the applied first polymer layer arrangement to a further application station,
iv) applying a second polymer layer arrangement onto the first polymer layer arrangement at the further application station, the second polymer layer arrangement having at least one polymer layer, wherein the second polymer
layer arrangement forms a second outermost polymer surface of the laminate, wherein at least one of the first and the second polymer layer arrangement contains a water vapor and/or oxygen transmission polymer barrier layer.

The present invention also refers to a multi-layer packaging laminate obtainable by such a manufacturing method. Since the multi-layer packaging laminate is particularly useful in producing tubes or tube packaging containers, as they are used as collapsible tube packaging containers to offer mainly paste-like goods, be it e. g. cosmetic goods, like tooth paste, shampoos, hair dyes, sun protection, or be it e. g. foodstuff, like mustard, tomato paste, hazelnut or chocolate cream to name but a few, the present invention also refers to a tube packaging container having at least a tube body made out of the multi-layer packaging laminate.

To explain the present invention, first the method will be described, followed by the laminate obtainable by the method, and finally the tube will be described. Aspects of the laminate showing up in the discussion of the method or the tube are refinements of the laminate. Likewise, aspects of the method showing up in the discussion of the laminate or the tube are refinements of the method.

A method of the generic kind is known from WO 2018/070945 A1. This prior art document, in order to produce a tube laminate, teaches to coextrusion-laminate two prefabricated polyolefin films together by coextruding polymer layers as an intermediate layer arrangement between the two prefabricated films. The coextruded intermediate layer arrangement contains ethylene vinyl alcohol (EVOH), also known in the art as ethylene vinyl alcohol copolymer, as a polymer barrier core layer. This EVOH polymer barrier core layer is sandwiched between two tie layers, each of which on its side facing away from the EVOH barrier layer is in turn bonded to a respective extruded polyethylene layer. Each extruded polyethylene layer is thereby coextrusion-eliminated to a different one of the prefabricated polyolefin films. This leads to a symmetric seven-layer laminate structure formed by a prefabricated polyolefin film, an extruded polyethylene layer, a tie layer, an EVOH barrier layer, another tie layer, another extruded polyethylene layer, and another prefabricated polyolefin film, in the given order. The surfaces of the prefabricated polyolefin films which are facing away from the coextruded intermediate layer arrangement form exposed outermost polymer surfaces, in particular polyolefin surfaces. The prefabricated polyolefin films are blown polyolefin films, in particular blown multi-layer polyolefin films.

With regard to the generic method defined at the beginning of this specification, the known first prefabricated polyolefin film forms a base layer in the meaning of the present application, the known coextruded intermediate layer arrangement forms a first polymer layer arrangement in the meaning of the present application, and the known second prefabricated polyolefin film forms a second polymer layer arrangement in the meaning of the present application.

The use of two prefabricated polyolefin films to form both opposing outermost surfaces of the laminate poses considerable constraints to the skilled artisan trying to produce the multi-layer packaging laminate. Moreover, coextrusion-lamination of two prefabricated polyolefin films is a process with possible sources of faults, such as the inadvertent inclusion of volumes of air between the coextruded intermediate layer arrangement and the prefabricated polyolefin film, especially the second prefabricated polyolefin film.

It is therefore the object of the present invention, to provide a technical teaching to form a highly functional multi-layer packaging laminate, including a water vapor and/or oxygen polymer barrier layer, with less constraints and with less possible sources of production faults.

The present invention attains this object by refining the method as set forth at the beginning of this specification in that the second polymer layer arrangement is applied to the first polymer layer arrangement in a flowable state.

The method of the present invention allows to easily modify not only the layers of the first polymer layer arrangement, but also the layers of the second polymer layer arrangement, as both polymer layer arrangements are applied in a flowable state. The application in the flowable state allows to easily and quickly modify the amount of polymer applied per unit time onto a receiving surface of a receiving polymer layer. The use of a rigid prefabricated film within the manufacturing method discussed here is therefore advantageously confined to the polyolefin film base layer. This base layer preferably is the only prefabricated film that is used as a support to apply the first and the second polymer layer arrangements. All other layers of the packaging laminate are preferably applied in flowable state.

By applying the second polymer layer arrangement in the flowable state the risk of producing an unwanted, inadvertent inclusion of gas volumes, i. e. air volumes, between the polymer forming the second outermost polymer surface and a previously flowably applied first polymer layer arrangement is reduced compared to the prior art, where the constantly moving second prefabricated polyolefin film may contribute to drag small volumes of air along with the moving film between the coextruded intermediate layer arrangement and the second prefabricated polyolefin film and to entrap these volumes of air between the intermediate layer arrangement and the polyolefin film.

Each of the first and the second polymer layer arrangement can comprise only one polymer layer or can comprise a plurality of polymer layers. Preferably the first and/or the second polymer layer arrangement contain only polymer layers. This facilitates not only the application of the at least one polymer layer of the associated polymer layer arrangement onto the respectively receiving polymer layer, but also sets a basis to facilitate recycling of the multi-layer packaging laminate, if the polymer materials of the individual layers used to manufacture the laminate are adequately chosen.

One possibility, and this possibility is preferred due to the versatility it offers, to apply the first and/or the second polymer layer arrangement in the flowable state is to extrude the first and/or the second polymer layer arrangement onto its respectively receiving polymer layer.

Therefore, the first application station, according to a refinement of the present invention, may comprise an extruder station so that the first polymer layer arrangement can be extruded in parts or entirely onto the base layer or can be extruded in parts onto a layer sub-arrangement of the first polymer layer arrangement already applied to the base layer.

Although it is preferred to extrude the first polymer layer arrangement in one single coextrusion step, only a part of the first polymer layer arrangement may be applied by extrusion. The latter is for example the case, if another part, preferably a complementing part, of the first polymer layer arrangement has already been applied to the base layer by an application method other than extrusion, e. g. by coating. Such a part of the first polymer layer arrangement, that is made up of only a smaller number of layers than the entire first polymer layer arrangement, is referred to in the present application as a layer sub-arrangement of the first polymer layer arrangement.

Preferably, however, the entire first polymer layer arrangement is applied to the base layer by the same application method, particularly preferred in one single application step.

Alternatively or additionally, the further application station may comprise an extruder station so that the second polymer layer arrangement can be extruded in parts or entirely onto the first polymer layer arrangement or can be extruded in parts onto a layer sub-arrangement of the second polymer layer arrangement already applied to the first polymer layer arrangement. The above explanatory statements with regard to the extrusion of the first polymer layer arrangement in parts or in their entirety also apply mutatis mutandis to the second polymer layer arrangement.

The further application station can be a different station from the first application station, but can preferably be located within the same production line or production machine so that the base layer is transported subsequently through the first application station and the further application station in one single, preferably continuous, transport operation.

Alternatively, the further application station can be the same station as the first application station. Then the base layer, after having received the first polymer layer arrangement at the first, and possibly only, application station, is wound up as an intermediate product roll at the end of the production line or production machine, and is then transported back to the start of the production line. In a second run through the same machine the first application station, then as the further application station, is configured to apply the second polymer layer arrangement onto the first polymer layer arrangement to finish the multi-layer packaging laminate with the completion of the second run of the base layer and the applied layers carried by the base layer.

An extruder station as an application station has two basic components, that is the extruder device to convey or feed the flowable polymer material and that is the extruder nozzle to emit the polymer material conveyed or fed by the extruder device.

In some cases a feeding line to feed flowable polymer material to an extruder nozzle may be split, so that one extruder device feeds more than one extruder nozzle. This allows to extrude more layers than there are extruder devices. However, the maximum number of different polymer materials that can be extruded is confined to the number of extruder devices. Usually, a centrally extruded layer results from one extruder device feeding one extruder nozzle. Likewise usually, splitting a feeding line may then lead to a preferably mirror symmetric layer arrangement with the centrally extruded layer forming a virtual mirror symmetry layer with an identical sequence of layers being arranged on either side of the centrally extruded layer in a direction away from the centrally extruded layer.

Consequently, the extruder station of at least one of the first application station and the further application station can have one of the subsequently listed configurations, resulting in an arrangement of layers corresponding to the extruder station configuration:
a) one extruder device and one extruder nozzle to extrude only one layer, or
b) two extruder devices and two extruder nozzles, wherein each one of the two nozzles cooperates with a different one of the two extruder devices, to extrude exactly two layers, or
c) two extruder devices and three extruder nozzles, namely a first nozzle to emit polymer material conveyed by a first extruder device and two nozzles, preferably one on either side of the first nozzle, to emit polymer material conveyed by a second extruder device, to extrude exactly three layers, or
d) three extruder devices and three nozzles, wherein each one of the three nozzles cooperates with a different one of the three extruder devices, to extrude exactly three layers, or
e) three extruder devices and four nozzles, namely a first nozzle to emit polymer material conveyed by a first extruder device, a second nozzle to emit polymer material conveyed by a second extruder device, and two nozzles to emit polymer material conveyed by a third extruder device, to extrude exactly four layers,
f) three extruder devices and five nozzles, namely a first nozzle to emit polymer material conveyed by a first extruder device, two nozzles, preferably one on either side of the first nozzle, to emit polymer material conveyed by a second extruder device, and two further nozzles, preferably one on either side of the arrangement of the three nozzles emitting polymer material conveyed by the first and the second extruder device, to emit polymer material conveyed a third extruder device, to extrude exactly five layers, or
g) four extruder devices and five nozzles, namely a first nozzle to emit polymer material conveyed by a first extruder device, two nozzles, one on either side of the first nozzle, to emit polymer material conveyed by a second extruder device, and two further nozzles, one on either side of the arrangement of the three nozzles emitting polymer material conveyed by a third and a fourth extruder device, to extrude exactly four layers.

The above optional configurations of an extruder station is not limiting. At least one of the first and the second application station may as well apply a one-, a two-, a three-, a four- and/or a five-layer arrangement with an extruder station configuration different from the above or may apply more than five layers to the respective receiving polymer layer.

Alternatively or additionally, at least one layer of the first and/or the second polymer layer arrangement may be coated onto a receiving polymer layer. Such an at least one coated layer may be the above-mentioned already applied layer sub-arrangement of the first and/or the second layer arrangement, respectively. Consequently, one or more layers of the first and/or the second polymer layer arrangement may be coated onto a receiving polymer layer, wherein the receiving polymer layer can be formed by a previously applied polymer layer or by the base layer, and one or more layers of the same polymer layer arrangement may be extruded onto a receiving polymer layer. In this context it does not matter whether the coating precedes the extrusion or vice versa.

Consequently, the first application station may comprise a coating station so that at least one layer of the first polymer layer arrangement can be coated onto a receiving polymer layer formed by the base layer or by a layer sub-arrangement of the first polymer layer arrangement already applied onto the base layer.

What is said for the first application station is, mutatis mutandis, also true for the further application station. Consequently, additionally or alternatively, the further application station may comprise a coating station so that at least one layer of the second polymer layer arrangement can be coated onto a receiving polymer layer formed by the first polymer layer arrangement or by a layer sub-arrangement of the second polymer layer arrangement already applied onto the first polymer layer arrangement.

The coating station can use a different coating techniques. Preferably, to achieve a coating as homogeneous over the coated area as possible, the coating station comprises a transfer roll so that the at least one layer of at least one of the first and second polymer layer arrangement is transferred from the transfer roll onto the receiving polymer layer.

A water vapor and/or oxygen transmission polymer barrier layer is a layer made out of barrier material that exhibits not more than half the transmission rate of water vapor and/or oxygen, respectively, as compared to an equally thick reference layer of LDPE as a reference material. A measurement of the water vapor transmission rate through a polymer film is preferably conducted according to DIN 53122 or according to DIN EN ISO 15106. It is important that the water vapor transmission rate of both, the barrier material candidate and the LDPE layer, is determined according to the same industrial standard.

A measurement of the oxygen transmission rate through a polymer film is preferably conducted according to DIN 53380 or according to DIN EN ISO 15105. Like in the case of determining the water vapor transmission rate it is less important which standard is used for the determination of the oxygen transmission rate than that the same standard is used for the determination of the oxygen transmission rate of the barrier material candidate and of the equally thick reference layer of LDPE.

Preferably, the water vapor and/or oxygen transmission polymer barrier layer comprises or consists of at least one of ethylene vinyl alcohol, polyvinyl alcohol, polyamide, cyclic olefin copolymer (COC), polyhydroxybutyrate-hexanoate (PHBH), polylactic acid (PLA), SiOx, and AlOx, all of which are well-known and proven polymer barrier materials in view of at least one of water vapor and oxygen transmission.

The resulting multi-layer packaging laminate is preferably free of an aluminum foil, in order to enhance its recyclability. It may be conceived, however, that the polyolefin film base layer is metallized on at least one side, preferably on exactly one side. This exactly one side is preferably the side onto which the first polymer layer arrangement is applied, so that the exposed first outermost polymer surface of the base layer remains sealable to a layer of a compatible polymer. This layer of a polymer that is compatible to the polymer material forming the first outermost polymer surface is preferably the polymer material that forms the second outermost polymer surface, so that the first and the second outermost polymer surfaces can be overlapped and heat-sealed to form a tube body for a tube packaging container.

Usually, the polymer barrier layer in the finished multi-layer packaging laminate does not have an exposed surface, but is sandwiched between further polymer layers. In order to facilitate the bonding of the water vapor and/or oxygen transmission polymer barrier layer to such further polymer layers, the water vapor and/or oxygen transmission polymer barrier layer is preferably applied by coextrusion with a tie layer on each side of the polymer barrier layer. The configurations of extruder station set forth above perfectly allow for such a three-layer coextrusion of the central barrier layer and a tie layer on either side of the central barrier layer.

Such a three-layer tie layer/barrier layer/tie layer structure can be an entire first polymer layer arrangement or can be a part of the first or the second polymer layer arrangement. In order to provide the preferred second outermost polymer surface by a polymer material that is compatible with the polyolefin material forming the first outermost polymer surface, the three-layer tie layer/barrier layer/tie layer structure, consequently in particular as a part of the second polymer layer arrangement, is preferably part of a coextruded five-layer structure with each tie layer being sandwiched between the polymer barrier layer and a polyolefin layer. However, it is important to notice that such a coextruded five-layer structure can also form the first polymer layer arrangement. In this case, the second polymer layer arrangement can preferably be formed entirely by polyolefin layers, in order to firstly ensure that the entire multi-layer packaging laminate is as much formed by material of one polymer family only, in the present case polyolefin, and to secondly ensure the already explained preferred sealability of the first and the second outermost polymer surfaces with one another, for example to allow to form a tube body out of the multi-layer packaging laminate.

Additionally or alternatively, the water vapor and/or oxygen transmission polymer barrier layer can be coated onto the receiving polymer layer. Coating, in particular coating by a transfer roll, is particularly preferred for polyvinyl alcohol (PVOH) as polymer barrier material, which can be particularly easily applied in a thin layer by coating. The coated PVOH layer preferably has a thickness of between 1 and 5 µm, particularly preferably a thickness of 2 or 3 µm. However, it should not be excluded that at least one of EVOH, COC, PHBH, PLA, SiOx, and AlOx, as barrier polymer is applied by coating.

In order to facilitate recycling of the multi-layer packaging laminate, the first or the second polymer layer arrangement, that is the polymer layer arrangement that does not contain a water vapor and/or oxygen polymer barrier layer, preferably consists of only polyolefin layers. To that end the polymer layer arrangement that does not contain a water vapor and/or oxygen polymer barrier layer may further preferably consist of only polyolefin layers based on one and the same monomer. Particularly preferably, this the polymer layer arrangement may consequently consist of only polyethylene layers. Less preferred, but still possible this the polymer layer arrangement may consist of only polypropylene layers.

At least two of the polyolefin layers may differ in their density and/or molecular structure, in order to design the respective polymer layer arrangement according to its technical objective. For example, the polymer layer arrangement consisting of only polyethylene layers may be a three-ply structure with a central polyethylene layer providing stability and rigidity and therefore having a higher HDPE content than the two neighboring polyethylene layers. The central polyethylene layer in this case may for example consist of 100% by weight or weight-% of HDPE, allowing or better disregarding inevitable impurities, or may be a blend of different density variations of polyethylene. The central polyethylene layer may include a nucleating agent.

For example, the central polyethylene layer may have an HDPE content of between 60 to 20% by weight, the rest being LDPE and/or preferably MDPE. A preferred blend consists of only HDPE and MDPE.

The polyethylene layers sandwiching the central polyethylene layer between them may be formed of 100% by weight of MDPE, again and always disregarding inevitable impurities, or may be a blend of MDPE and LDPE, preferably with an MDPE content of between 40 to 80% by weight, the rest being LDPE and/or LLDPE to ensure sealability of this layer. The sealing layer can also comprise at least one of an EMA-based peelable resin, an olefine-based plastomer, an olefine-based elastomer, and an olefine-based lonomer. The central polyethylene layer is preferably free of LLDPE.

Preferably only one of the first and the second polymer layer arrangement contains a water vapor and/or oxygen polymer barrier layer while the respective other polymer layer arrangement is preferably free of a water vapor and/or oxygen polymer barrier layer.

The polyethylene film base layer as a prefabricated film existing already at the beginning of the manufacturing method is preferably a blown film, and can be a monolayer polyolefin film or a multi-layer polyolefin film. It can as well be a cast film. The polyethylene film base layer may have no molecular orientation, may have a monoaxial molecular orientation or may have a biaxial orientation.

If the base layer is formed as a multi-layer polyolefin film, it is preferably a three-layer polyolefin film. As a multi-layer polyolefin film it preferably exhibits different densities in different layers. Preferably, when polyethylene is used as the polyolefin material, a central polyethylene layer, sandwiched between at least two, preferably exactly two, other polyethylene layers has a higher density than the polyethylene layers sandwiching the central polyethylene layer. The higher density may be achieved by a higher HDPE content of the central polyethylene layer than of neighboring polyethylene layers. The central polyethylene layer may be made of 100% HDPE, allowing or better disregarding inevitable impurities, or may be made of a blend of HDPE and MDPE and/or LDPE.

In order to secure the sealability of the first outermost polymer surface, the polyolefin layer forming the first outermost polymer surface and not being the above-mentioned central polyolefin layer, in particular polyethylene layer, preferably contains or consists of LDPE. At least a content of LLDPE and/or MDPE in this layer is preferable to enhance sealability. The central polyolefin layer, in particular polyethylene layer, is preferably free of LLDPE. To enhance its sealability, the polyolefin layer forming the first outermost polymer surface may, additionally or alternatively to LDPE and/or LLDPE, contain a percentage of at least one of an ethylene-methacrylic-acid-based peelable resin, an olefin-based plastomer, an olefin-based elastomer, and an olefin-based ionomer. For example, the polyolefin layer forming the first outermost polymer surface may contain a percentage of ethylene-methacrylic acid or, more generally speaking, of copolymers of ethylene and methacrylic acid. The same material options apply to the polyolefin layer forming the second outermost polymer surface. The mentioned percentage is a percentage by weight and does not exceed 45 weight-%, so that the majority of the polyolefin layer is formed by a polyolefin material. Preferably the mentioned percentage does not exceed 35 weight-%, more preferably the mentioned percentage does not exceed 20 weight-%. Most preferably the polyolefin layer forming the first and/or the second outermost polymer surface may be composed by 95 weight-% or more out of a material based on one and the same monomer, said monomer preferably being either ethylene or propylene.

Polyolefin layers of the multi-layer packaging laminate which do not form an outermost polymer surface preferably have a polyolefin content of at least 80 weight-%, more preferably of at least 90 weight-%, and most preferably of at least 95 or even 98 weight-%. Any polyolefin layer of the multi-layer packaging laminate may consist of polyolefin material, disregarding inevitable impurities.

The present invention further relates to a multi-layer packaging laminate, in particular a multi-layer tube laminate, manufactured by the method as described above. The first outermost polymer surface of the laminate and the second outermost polymer surface are heat sealable to each other to enable the easy formation of a tube body extending along a tube body longitudinal axis. The tube body longitudinal axis defines an axial direction extending along the tube body axis, radial directions extending orthogonal to the tube body axis and a circumferential direction around the tube body axis. The tube body can be easily formed by rolling a piece of the multi-layer packaging laminate to overlap opposite circumferential end portions circumferentially and axially and to preferably seal or adhesively bond the overlapping portions of the first and the second outermost polymer surfaces with one another.

An undesired ovality of a tube body formed out of a piece of the multi-layer packaging laminate can be avoided, if at least one of the following thickness ranges applies to the associated laminate components:
- 50 to 220 µm for the base layer,
- 3 to 25 µm for the water vapor and/or oxygen transmission polymer barrier layer,
- 15 to 70 µm for a layer arrangement consisting of a tie layer, the water vapor and/or oxygen transmission polymer barrier layer, and a tie layer, the layer arrangement having been formed by coextrusion as the first or the second polymer layer arrangement,
- 20 to 90 µm for a three-ply polyolefin layer, preferably polyethylene layer, coextruded as the first or the second polymer layer arrangement, and
- 20 to 90 µm for a layer arrangement consisting of a polyolefin layer, preferably a polyethylene layer, a tie layer, the water vapor and/or oxygen transmission polymer barrier layer, a tie layer, and a polyolefin layer, preferably a polyethylene layer, the layer arrangement having been formed by coextrusion as the first or the second polymer layer arrangement.

The entire laminate thickness preferably lies in the range from 130 to 400 µm.

In order to facilitate recycling of the multi-layer packaging laminate the laminate is preferably formed of at least 90 % by weight, more preferably of at least 95% by weight, of a polyolefin based on one and the same monomer. Although this basic monomer can be propylene, and hence the polyolefin can be polypropylene, the basic monomer is preferably ethylene, and the preferred polyolefin is therefore polyethylene.

The present application also relates to a tube container having a tube body formed of the multi-layer packaging laminate as described above. The tube body extends along the tube body longitudinal axis mentioned above. The first and the second outermost polymer surfaces are connected to one another in a connection region which extends along the tube body longitudinal axis over at least 90 % of the length of the tube body, and in which the first and the second outermost polymer surfaces overlap in a circumferential direction around the tube body longitudinal axis and in an axial direction along the tube body longitudinal axis. The connection of the first and the second outermost polymer surfaces with one another is preferably a sealed, that is a heat sealed, connection.

At one longitudinal end the tube body is preferably closed, for example by a cross seam extending orthogonal to the tube body longitudinal axis, along which the opposing portions of one and the same outermost polymer, preferably polyethylene, surface are connected to one another, particularly preferably by sealing.

At the respective other longitudinal end a shoulder portion can be connected to the tube body, again preferably by sealing. The shoulder portion can be formed by injection molding and can have a tube body connecting portion to be sealed or, less preferred, adhesively bonded to one of the outermost polymer, in particular polyethylene, surfaces of the tube body, preferably to the outermost polymer, in particular polyethylene, surface facing towards the interior of the tube body, i. e. towards the tube body longitudinal axis. Axially adjacent or axially spaced apart from the tube body connecting portion the shoulder portion can have a neck portion with an extraction opening through which the interior of the tube body is accessible from the outside and through which content contained in the tube body can be extracted, e. g. by squeezing the tube body.

The shoulder may have a lid to selectively open and close the extraction opening. The lid may be screwed on and off the neck portion or the lid may be formed in one piece with the shoulder, pivotable about a pivot axis that extends obliquely, preferably orthogonally, to the tube body longitudinal axis.

The shoulder, attached to the tube body, with the tube body being closed at the longitudinal end opposite the shoulder, form a tube packaging container. This container can be closed and opened with the above-mentioned lid.

The present invention will subsequently be described in further detail based on the accompanying drawings. The individual drawings show:
fig. 1 a rough schematic view of a tandem manufacturing line to manufacture a multi-layer packaging laminate of the present invention according to the method of the present invention in one single run through the manufacturing line,
fig. 2 a rough schematic cross-section through a first embodiment of a multi-layer packaging laminate of the present invention,
fig. 3 a rough schematic cross-section through a second embodiment of a multi-layer packaging laminate of the present invention, and
fig. 4 a rough schematic front view of a tube packaging container with a tube body made of a multi-layer packaging laminate of the present invention.

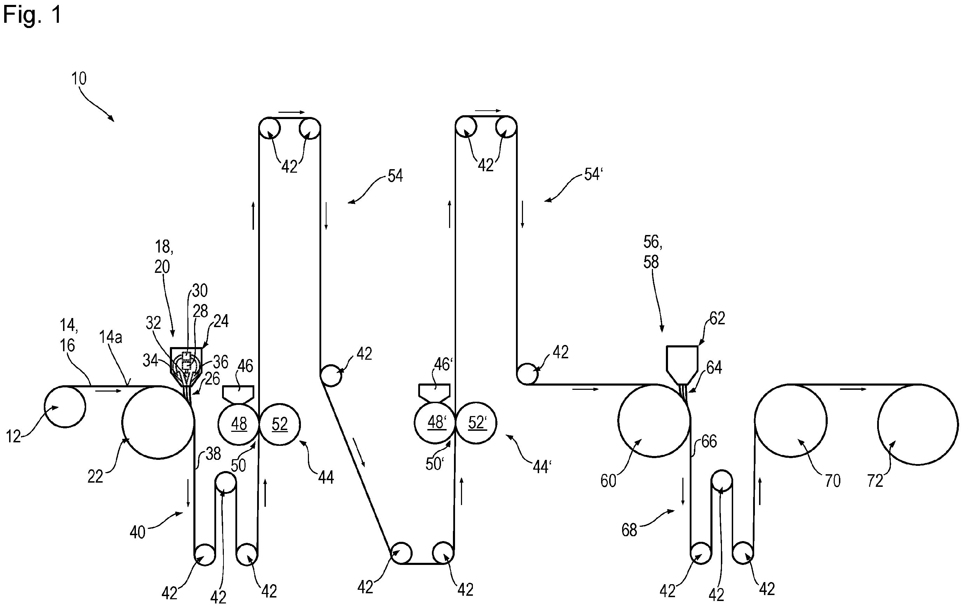

In figure 1 a tandem manufacturing line to manufacture a multi-layer packaging laminate of the present invention is generally designated as 10.

The manufacturing process starts on the left side of figure 1 with a stock roll 12 of a prefabricated polyethylene film 14 that acts as a base layer 16. The stock roll 12 is unwound and the unwound polyethylene film 14 is fed to a first application station 18 which comprises an extruder station 20.

All roll axes of rolls in the tandem manufacturing line 10 as well as the extension of the base layer 16 in transverse or cross direction are oriented orthogonal to the drawing plane of fig. 1.

The polyethylene film 14 is led around a first extrusion backing roll 22 while a first extruder assembly 24 of the extruder station 20 extrudes, as an example only, a three-ply first polymer layer arrangement 26 onto the surface 14a facing away from the first extrusion backing roll 22.

The first extruder assembly 24 is configured according to lit. c) of the above list of possible extruder station configurations, i. e. it has two extruder devices 28 and 30 and three extruder nozzles 32, 34 and 36. The extruder device 28 feeds flowable polymer material to extruder nozzle 32, while the extruder device 30 feeds another, different flowable polymer material to the extruder nozzles 34 and 36. In the present example, extruder nozzle 32 emits flowable EVOH, while the extruder nozzles 34 and 36 each emit tie layer material, for example a maleic anhydride grafted polyethylene.

After leaving the first extrusion backing roll 22 the intermediate laminate 38, comprising the polyethylene film 14 or base layer 16, respectively, and the applied first polymer arrangement 26, enters a first extrusion cooling zone 40 where the intermediate laminate 38 is led around deflection rollers 42 to allow the first polymer arrangement 26 to dry and solidify.

Again, emphasis is made to the fact that the depiction of the tandem manufacturing line 10 and figure one is highly schematic and only shows the basic technical principles applied to the base layer 16 during the manufacture of the multi-layer packaging laminate.

After leaving the first extrusion cooling zone 40 the intermediate laminate 38 runs through a coating station 44 which is inactive in the depicted example.

If the coating station 44 was however active, a flowable polymer material could be applied onto the base layer 16 or onto the intermediate laminate 38 by coating, in particular on the same side on which the extruder station 20 extrudes the first polymer layer arrangement 26. To that end, and applicator 46 applies a flowable polymer material to a transfer roll 48 which transfers the flowable polymer material to the base layer 16 or to the intermediate laminate 38 in a nip 50 created between the transfer roll 48 and coating backing roll 52. The coating station 44 is particularly suitable to coat the base layer 16 or the intermediate laminate 38 with a flowable barrier polymer, like for example PVOH or EVOH, which are water-soluble and can therefore be diluted to a sufficiently liquid state for roll-to-substrate coating as it is executed in the coating station 44.

The coating station 44 might as well be arranged before the extruder station 20 in the feeding direction of the base layer 16, and is only exemplarily depicted subsequent to the extruder station 20.

Subsequent to the coating station 44 the intermediate laminate 38 runs through a coating cooling and/or drying zone 54, where coated polymer material, if applied to the base layer 16 or to the intermediate laminate 38, can dry and solidify. In the coating cooling and/or drying zone 54 the intermediate laminate 38 changes its direction of movement several times guided by corresponding deflection rollers 42.

Subsequent to the coating cooling and/or drying zone 54 the intermediate laminate 38 may run through a second coating station 44', which for the purpose of facilitating its description, may be set up as the coating station 44, i. e. may exhibit a second applicator 46', a second transfer roll 48' and a second coating backing roll 52'.

The second coating station 44' is inactive in the present embodiment, but, if active, it would work exactly as the coating station 44, to the description of which reference is therefore made. Again the second applicator 46' would apply a flowable polymer material to the second transfer roll 48' which transfers the flowable polymer material to the to the intermediate laminate 38 in a second nip 50' created between the second transfer roll 48' and the second coating backing roll 52'.

After leaving the second coating cooling and/or drying zone 54' the intermediate laminate 38 enters a second application station 56 which is configured as an extruder station 58. Again the sequence of the second coating station 44' and the second extruder station 58 in the feed direction of the intermediate laminate 38 is only exemplary. The second coating station 44' and the second extruder station 58 may as well be arranged in the opposite order in the feed direction of the intermediate laminate 38.

The setup of the second extruder station 58 is basically identical to the setup of the first extruder station 20: the intermediate laminate 38 runs around a second extrusion backing roll 60 while a second extruder assembly 62 extrudes a three-ply second polymer layer arrangement 64 onto the intermediate laminate 38 to thereby create the multi-layer packaging laminate 66. The second extruder assembly 62 is identical to the first extruder assembly 24. A detailed description of the second extruder assembly 62 is therefore omitted.

In the present example the second extruder station 58 may apply a three-ply polyethylene layer to the intermediate laminate 38 with a central polyethylene layer of higher density, obtained by a higher HDPE content to the two neighboring further polyethylene layers. The outer polyethylene layers sandwiching the central polyethylene layer between them may be formed out of a blend of MDPE and LDPE or out of only either MDPE or LDPE. Since one of the outer polyethylene layers will form the second outermost polymer surface of the multi-layer packaging laminate 66 which preferably is sealable with the first outermost polymer surface formed by the base layer 16, the outer polyethylene layer may contain LLDPE.

The second extruder station 58 is only exemplarily depicted to apply a three-ply second polymer layer arrangement 64. The number of layers of the second polymer layer arrangement 64 as well as the number of layers of the first polymer layer arrangement 26 can be 1, 2, 3, 4 or 5. Higher numbers of layers in the polymer layer arrangement are also conceivable, but usually are not practically relevant.

The packaging laminate 66, after leaving the second extruder station 58, runs through a second extrusion cooling zone 68 in which the second polymer layer arrangement 64 can dry and solidify. The setup of the second extrusion cooling zone 68 is identical to that of the first extrusion cooling zone 40 and will therefore not be further described in detail.

After leaving the second extrusion cooling zone 68 the finished packaging laminate 66 is led around a final deflection roll 70 and is subsequently wound up to form a stock roll 72 which can then be delivered to a customer and/or be further processed, e. g. to form a tube body of a tube packaging container.

The setup of the manufacturing line 10 with two identical or very similar extruder stations 20 and 58 in line is a basis for the name "tandem manufacturing line".

Instead of applying the first and the second polymer layer arrangements 26 and 64 in one single manufacturing line 10, the intermediate laminate 38, after substantially cooling down, could be wound up as an intermediate stock roll and be either transported to another manufacturing site to apply the second polymer layer arrangement 64 or could be transported to the start position of the then-shortened manufacturing line 10, in replacement of stock roll 12, and could then run through the shortened single-extrusion manufacturing line 10 a second time, which has in the meantime been configured to extrude the second polymer layer arrangement 64 instead of the first polymer layer arrangement 26.

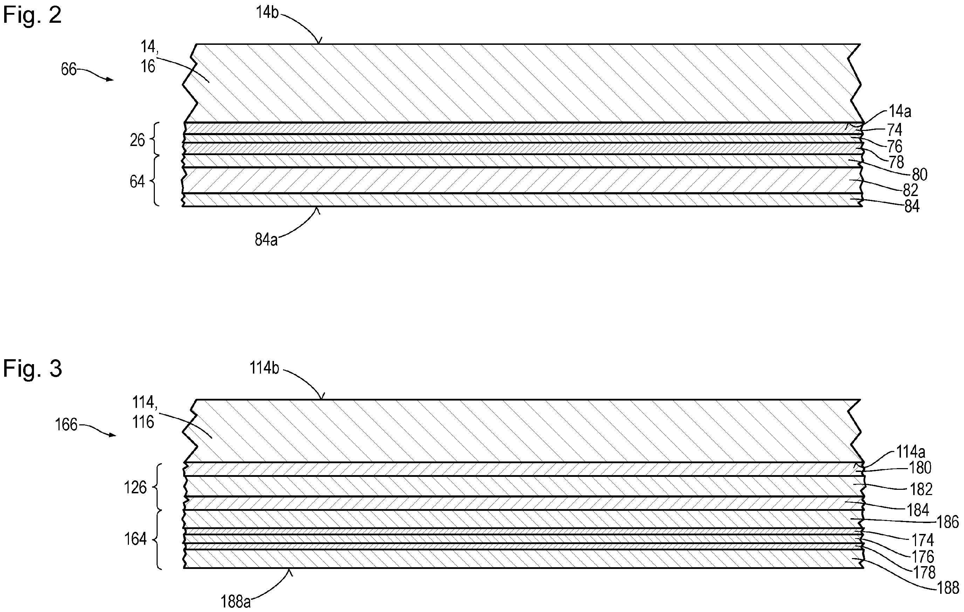

Figure 2 shows a cross-section through a first embodiment of the multi-layer packaging laminate 66 that has been manufactured by the manufacturing line 10 of figure 1.

The laminate 66 has the polyethylene film 14 with an exemplary thickness of between 90 and 120 µm, for example of 105 µm, as the base layer 16. An outer surface 14b of the polyethylene film 14 forms a first outermost polymer surface of the laminate 66. On the opposite surface 14a of the polyethylene film, as has been explained in the context of figure one, further polymer layers are applied.

The polyethylene film 14 is preferably composed of more than one polyethylene layers, preferably of three polyethylene layers, which are not depicted in detail in figure 2. The central polyethylene layer of the polyethylene film 14 has preferably a higher density than the neighboring polyethylene layers sandwiching the central polyethylene layer. The polyethylene layer forming the first outermost polymer surface 14b preferably has an LDPE or even more preferably and LLDPE content to enhance its sealability.

The polyethylene film 14 is intended to form an outer layer of the packaging formed out of the laminate 66. The polyethylene film 14 for example carries color pigments, e. g. white color pigments, such as TiO₂, in order to provide a neutral, opaque outer appearance which shields the further layers applied to surface 14a from being seen, and which provides a neutral background for a printing that may be applied on the first outermost polymer surface 14b. Any other color than white is just as well possible. Equally, the polyethylene film 14 may be transparent, and can even be metallized on its surface 14a, e. g. by vapor deposition.

The surface 14a of the polyethylene film 14 immediately carries the first polymer layer arrangement 26 which was extruded onto the surface 14a in the first application station 18. The first polymer layer arrangement 26 comprises a first tie layer 74 with a thickness in the range of 10 to 20 µm, preferably 15 µm, made of maleic anhydride grafted polyethylene, polymer barrier layer 76 with a thickness in the range of 7 to 14 µm, preferably 10µm, made of EVOH, and a second tie layer 78 which is preferably identical to the first tie layer 74.

The surface of the first polymer layer arrangement 26 facing away from the base layer 16 carries the second polymer layer arrangement 64.

The second polymer layer arrangement 64 has a first outer polyethylene layer 80 with a thickness in the range of 15 to 20 µm, preferably with a thickness of 17,5 µm, formed of a blend of 60% by weight of MDPE and 40% by weight of LDPE, disregarding inevitable impurities.

The second polymer layer arrangement 64 has a central polyethylene layer 82 with a thickness in the range of 20 to 40 µm, preferably with a thickness of 30 µm, formed of 100 % by weight of HDPE, disregarding inevitable impurities.

The second polymer layer arrangement 64 has a second outer polyethylene layer 84 that is identical to the first outer polyethylene layer 80. The exposed surface 84a of the second outer polyethylene layer 84 which faces away from the remaining layers of the second polymer layer arrangement 64, and of the multi-layer packaging laminate 66 in general, forms the second outermost polymer surface of the multi-layer packaging laminate 66.

Figure 3 shows a cross-section of a second possible embodiment of the multi-layer packaging laminate of the present invention. Physically or functionally identical components and component sections as in the first embodiment of figure 2 are in figure 3 labeled with the same reference numerals, but increased by 100. The second embodiment is subsequently explained only to the extent to which it differs from the first embodiment, the specification of which also applies to explain the second embodiment.

The three main differences between the first and the second embodiment are that in the second embodiment the first polymer layer arrangement 126 is a three-ply polyethylene layer arrangement with the polyethylene layers 180, 182 and 184, that the polymer barrier layer 176 is contained in the second polymer layer arrangement 164, and that the second polymer layer arrangement 164 is a five-ply layer arrangement.

These polyethylene layers 180, 182 and 184 have the same polymer composition as their respective counterparts in the first embodiment, but have slightly different thicknesses. Polyethylene layers 180 and 184 are again identical, but have a thickness of 15 µm. The central polyethylene layer 182 has a thickness of 20 µm.

Likewise, the tie layers 174 and 178 have the same chemical composition as their counterparts in the first embodiment, but are thinner. The thickness of each of the tie layers 174 and 178 is 8 µm.

The barrier layer 176 is again an EVOH layer with a thickness of 10 µm. The barrier layers 76 and 176 of both embodiments are therefore identical.

The tie layers 174 and 178 and the EVOH barrier layer 176 sandwiched by the tie layers 174 and 178 are in turn as a whole sandwiched between a first polyethylene layer 186 and an identical second polyethylene layer 188. The first and the second polyethylene layers 186 and 188, respectively, have a material composition of 60% by weight of MDPE and of 40% by weight of LDPE, disregarding inevitable impurities. The polyethylene layers 186 and 188 therefore by their material composition correspond to polyethylene layers 180 and 184. However, polyethylene layers 186 and 188 have a greater thickness in the range of 18 to 26 µm, preferably of 22 µm.

The exposed surface 188a of the polyethylene layer 188 forms the second outermost polymer surface of the multi-layer packaging laminate 166 of the second embodiment.

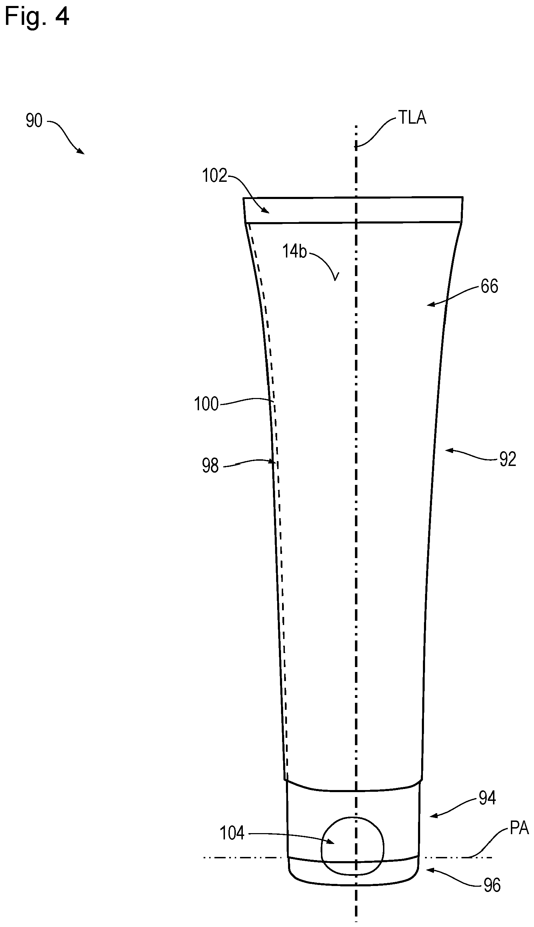

Figure 4 shows a schematic front view of the tube packaging container 90, having a tube body 92 made of the multi-layer packaging laminate 66 and a shoulder 94 formed integrally with a pivotable lid 96 on which the tube packaging container 90 can stand. Alternatively the tube body 92 can as well be made of the second embodiment of the multi-layer packaging laminate 166.

In order to form the tube body 92, a blank piece of the multi-layer packaging laminate 66 is rolled around a mandrel such that the circumferential end portions of the rolled blank piece overlap. In the so created overlapping region 98 the second outermost polymer surface 84a overlaps the first outermost polymer surface 14b axially along a tube body longitudinal axis TLA and circumferentially around the tube body longitudinal axis TLA. Both outermost polymer surfaces 14b and 84a, as well as the polyethylene layers 14 and 84 forming them, are connected by heat sealing in the overlapping region 98 to create longitudinal connecting seam 100 in a lap seal configuration.

At the longitudinal end distant from the shoulder 94 the tube body 92 is closed by a cross seam 102 in a fin seal configuration. Other than in the longitudinal seam 100, where an inner surface 84a is sealed with an outer surface 14b, in the cross seam 102 opposing areas of the inner surface 84a are sealed with one another.

The tube body 92 at the longitudinal end close to the shoulder 94 surrounds a part of the shoulder 94 and overlaps this part in the axial direction and completely in the circumferential direction. The overlapping parts of the tube body 92 and the shoulder 94 are also connected by heat sealing. To that end, the shoulder 94 is formed of injection molded polyethylene, so that the materials of the shoulder 94 and polyethylene layer 84 of the multi-layer packaging laminate 66 are compatible.

The lid 96 is pivotable about a pivot axis PA, for example through a film joint connecting the lid 96 integrally with the shoulder 94. An indentation 104 facilitates lifting the lid 96 from the shoulder 94 to open the tube packaging container 90.

## Claims

1. A method for forming a multi-layer packaging laminate (66; 166), in particular a multi-layer tube laminate (66; 166), the method comprising the following steps in the mentioned order:
i) providing a polyolefin film (14; 114) as a base layer (16; 116) of the laminate (66; 166), wherein the base layer (16; 116) forms a first outermost polymer surface (14b; 114b) of the laminate (66; 166),
ii) applying a first polymer layer arrangement (26; 126) in a flowable state onto the base layer (16; 116) at a first application station (18), the first polymer layer arrangement (26; 126) having at least one polymer layer (74, 76, 78; 180, 182, 184),
iii) transporting the base layer (16; 116) with the applied first polymer layer arrangement (26; 126) to a further application station (56),
iv) applying a second polymer layer arrangement (64; 164) onto the first polymer layer arrangement (26; 126) at the further application station (56), the second polymer layer arrangement (64; 164) having at least one polymer layer (80, 82, 84; 174, 176, 178, 186, 188), wherein the second polymer layer arrangement (64; 164) forms a second outermost polymer surface (84a; 188a) of the laminate,
wherein at least one of the first (26; 126) and the second polymer layer arrangement (64; 164) contains a water vapor and/or oxygen transmission polymer barrier layer (76; 176),
**characterized in that** the second polymer layer arrangement (64; 164) is applied to the first polymer layer arrangement (26; 126) in a flowable state.

2. The method according to claim 1,
**characterized in that** the first application station (18) comprises an extruder station (20) so that the first polymer layer arrangement (26; 126) is extruded in parts or entirely onto the base layer (16; 116) or is extruded in parts onto a layer sub-arrangement of the first polymer layer arrangement (26; 126) already applied to the base layer (16; 116),
and/or
the further application station (56) comprises an extruder station (58) so that the second polymer layer arrangement (64; 164) is extruded in parts or entirely onto the first polymer layer arrangement (26; 126) or is extruded in parts onto a layer sub-arrangement of the second polymer layer arrangement (64; 164) already applied to the first polymer layer arrangement (26; 126).

3. The method according to claim 2,
**characterized in that** the extruder station (20; 58) of at least one of the first application station (18) and the further application station (56) has either
a) one extruder device and one extruder nozzle to extrude only one layer, or
b) two extruder devices and two extruder nozzles, wherein each one of the two nozzles cooperates with a different one of the two extruder devices, to extrude exactly two layers, or
c) two extruder devices (28, 30) and three extruder nozzles (32, 34, 36), namely a first nozzle (32) to emit polymer material conveyed by a first extruder device (28) and two nozzles (34, 36), one on either side of the first nozzle (32), to emit polymer material conveyed by a second extruder device (30), to extrude exactly three layers, or
d) three extruder devices and three nozzles, wherein each one of the three nozzles cooperates with a different one of the three extruder devices, to extrude exactly three layers, or
e) three extruder devices and four nozzles, namely a first nozzle to emit polymer material conveyed by a first extruder device, a second nozzle to emit polymer material conveyed by a second extruder device, and two nozzles to emit polymer material conveyed by a third extruder device, to extrude exactly four layers,
f) three extruder devices and five nozzles, namely a first nozzle to emit polymer material conveyed by a first extruder device, two nozzles, one on either side of the first nozzle, to emit polymer material conveyed by a second extruder device, and two further nozzles, one on either side of the arrangement of the three nozzles emitting polymer material conveyed by the first and the second extruder device, to emit polymer material conveyed a third extruder device, to extrude exactly five layers, or
g) four extruder devices and five nozzles, namely a first nozzle to emit polymer material conveyed by a first extruder device, two nozzles, one on either side of the first nozzle, to emit polymer material conveyed by a second extruder device, and two further nozzles, one on either side of the arrangement of the three nozzles emitting polymer material conveyed by a third and a fourth extruder device, to extrude exactly four layers.

4. The method according to one of the preceding claims,
**characterized in that** the first application station (18) comprises a coating station (44) so that at least one layer of the first polymer layer arrangement (26; 126) is coated onto a receiving polymer layer formed by the base layer (16; 116) or by a layer sub-arrangement of the first polymer layer arrangement (26; 126) already applied onto the base layer (16; 116),
and/or
the further application station comprises (56) a coating station (44') so that at least one layer of the second polymer layer arrangement (64; 164) is coated onto a receiving polymer layer formed by the first polymer layer arrangement (26; 126) or by a layer sub-arrangement of the second polymer layer arrangement (64; 164) already applied onto the first polymer layer arrangement (16; 116).

5. The method according to one of the preceding claims,
**characterized in that** the water vapor and/or oxygen transmission polymer barrier layer (76; 176) comprises or consists of at least one of ethylene vinyl alcohol, polyvinyl alcohol, polyamide, cyclic olefin copolymer (COC), polyhydroxybutyrate-hexanoate (PHBH), polylactic acid (PLA), SiOx, and AlOx.

6. The method according to one of the preceding claims, including claim 2, **characterized in that** the water vapor and/or oxygen transmission polymer barrier layer (76; 176) is applied by coextrusion with a tie layer (74, 78; 174, 178) on each side of the water vapor and/or oxygen transmission polymer barrier layer (76; 176).

7. The method according to claim 6,
**characterized in that** the water vapor and/or oxygen transmission polymer barrier layer (176) is part of a coextruded five-layer structure (164) with each tie layer (174, 178) being sandwiched between the water vapor and/or oxygen transmission polymer barrier layer (176) and a polyolefin layer (186, 188).

8. The method according to one of the preceding claims, including claim 4, **characterized in that** the water vapor and/or oxygen transmission polymer barrier layer is coated onto the receiving polymer layer.

9. The method according to one of the preceding claims,
**characterized in that** the first (126) or the second polymer layer arrangement (64) consists of only polyolefin layers (180, 182, 184; 80, 82, 84).

10. The method according to claim 9,
**characterized in that** at least two of the polyolefin layers (80, 82, 84; 180, 182, 184) differ in their density and/or molecular structure.

11. A multi-layer packaging laminate (66; 166), in particular a multi-layer tube laminate (66; 166), manufactured by the method according to one of the preceding claims, wherein the first outermost polymer surface (14b; 114b) of the multi-layer packaging laminate (66; 166) and the second outermost polymer surface (84a; 188a) are heat sealable to each other.

12. The multi-layer packaging laminate (66; 166) according to claim 11, **characterized in that** at least one of the following thickness ranges applies:
- 50 to 220 µm for the base layer (16; 116),
- 3 to 25 µm for the water vapor and/or oxygen transmission polymer barrier layer (76; 176),
- 15 to 70 µm for a layer arrangement consisting of a tie layer (74; 174), the water vapor and/or oxygen transmission polymer barrier layer (76; 176), and a tie layer (78; 178) coextruded as the first (26; 126) or the second polymer layer arrangement (64; 164),
- 20 to 90 µm for a three-ply polyolefin layer structure (80, 82, 84; 180, 182, 184) coextruded as the first (126) or the second polymer layer arrangement (64), and
- 20 to 90 µm for a layer structure consisting of a polyolefin layer (186), a tie layer (174), the water vapor and/or oxygen transmission polymer barrier layer (176), a tie layer (178), and a polyolefin layer (188) coextruded as the first or the second polymer layer arrangement (164).

13. The multi-layer packaging laminate according to claim 11 or 12, **characterized in that** the entire laminate thickness is in the range from 130 to 400 µm.

14. The multi-layer packaging laminate (66; 166) according to one of claims 11 to 13,
**characterized in that** the multi-layer packaging laminate (66; 166) is formed of at least 90 % by weight of a polyolefin of one and the same basic monomer.

15. Tube container (90) having a tube body (92) formed of the multi-layer packaging laminate (66; 166) according to one of claims 11 to 14, wherein the tube body (92) extends along a tube body longitudinal axis (TLA), wherein the first and the second outermost polymer surfaces (14b, 84a; 114b, 188a) are connected to one another in a connection region (98) that extends along the tube body longitudinal axis (TLA) over at least 90 % of the length of the tube body (92), and in which the first and the second outermost polymer surfaces (14b, 84a; 114b, 188a) overlap in a circumferential direction around the tube body longitudinal axis (TLA) and along the tube body longitudinal axis (TLA).
